# EUROPÄISCHE PATENTANMELDUNG

(11) **EP 0 897 104 A1**
(43) Veröffentlichungstag der Anmeldung: **17.02.1999**
(21) Anmeldenummer: 98810757.9
(22) Anmeldetag: 07.08.1998
(51) Int. Cl.: G01G 21/22, G01G 19/02

(54) **Lastträger für Wägevorrichtung**

(30) Priorität: 14.08.1997 CH 1909/97
(71) Anmelder: Busch-Werke AG, 7203 Trimmis (CH)
(72) Erfinder: Fausch, Hansjürg, 7206 Igis (CH)
(74) Vertreter: Eder, Carl E.

(57) **Zusammenfassung**

Bekannte Lastträger für Wägevorrichtungen besitzen einen rechteckigen Rahmen sowie eine Vielzahl von miteinander und mit dem Rahmen fest verbundenen rohrförmigen Längs- und Querprofilen. Solche Lastträger sind unter anderem aufgrund eines aufwendigen Schweissverfahrens in der Herstellung teuer. Gegenstand der hier vorliegenden Erfindung ist nun ein neuartiger, insbesondere kostengünstig herstellbarer Lastträger. Dieser zeichnet sich im wesentlichen dadurch aus, dass die senkrecht zueinander angeordneten Längs- und Querprofile (3, 4) aus schmalen, im zusammengesetzten Zustand auf ihren Längsrändern vertikal stehenden, plattenförmigen Metallblechen mit einer Profilhöhe h und einer Wandstärke d bestehen, dass diese Profile (3, 4) entlang ihrer Längsränder mit je einer Schlitzreihe versehen sind, wobei die dazugehörigen Schlitze (3a, 4a) als von den Längsrändern ausgehende Ausnehmungen ausgestaltet sind, einen konstanten Abstand voneinander haben sowie eine Länge von h/2 aufweisen, und dass die Schlitzreihen der Längs- und Querprofile (3, 4) so entgegengesetzt zueinander angeordnet sind, dass diese Profile (3, 4) im zusammengesetzten Zustand ein mit dem Rahmen (2) verbundenes fachwerkartiges Gitter (6) bilden.

## Beschreibung

Die vorliegende Erfindung betrifft einen Lastträger für Wägevorrichtungen, wie Brückenwaagen und dergleichen, mit einem rechteckigen Rahmen sowie einer Vielzahl von miteinander und mit dem Rahmen fest verbundenen Längs- und Querprofilen. Letztere bilden zusammen mit dem Rahmen eine zur Aufnahme einer Wägeplatte bestimmte Auflagefläche.

Bekannte Lastträger dieser Art bestehen aus rohrförmigen Profilstäben aus Metall, die zur Herstellung des Lastträgers durch ein verhältnismässig aufwendiges Schweissverfahren miteinander verschweisst werden. Solche Lastträger sind einerseits wegen der erwähnten Schweissarbeit in der Herstellung teuer und andererseits weisen sie den Nachteil auf, dass zu ihrer Herstellung jeweils mehrere, speziell vorgefertigte und auf die jeweiligen Masse des herzustellenden Lastträgers abgestimmte Profilstäbe nötig sind, was nicht nur Nachteile für die Lagerung der Profilstäbe, sondern auch einen zusätzlichen Arbeitsaufwand zur Folge hat.

Der hier vorliegenden Erfindung liegt nun die Aufgabe zugrunde, einen neuen Lastträger für Wägevorrichtungen zu schaffen, dessen Herstellungsverfahren die vorstehend genannten Nachteile nicht aufweist, also insbesondere mit einem geringeren Aufwand an Schweissarbeit auskommt. Der erfindungsgemässe Lastträger soll dabei zudem aus einer möglichst kleinen - d.h. begrenzten - Anzahl von verschiedenartigen Profilen herstellbar sein.

Diese Aufgabe wird durch einen Lastträger mit den Merkmalen des Patentanspruchs 1 gelöst.

Vorteilhafte Ausführungsformen der Erfindung sind Gegenstand der abhängigen Ansprüche.

Der neuartige Lastträger zeichnet sich im wesentlichen dadurch aus, dass die senkrecht zueinander angeordneten Längs- und Querprofile aus schmalen, im zusammengesetzten Zustand auf ihren Längsrändern vertikal stehenden, plattenförmigen Metallblechen mit einer Profilhöhe h und einer Wandstärke d bestehen, dass diese Profile entlang ihrer Längsränder mit je einer Schlitzreihe versehen sind, wobei die dazugehörigen Schlitze als von den Längsrändern ausgehende Ausnehmungen ausgestaltet sind, einen konstanten Abstand voneinander haben sowie eine Länge von h/2 aufweisen, und dass die Schlitzreihen der Längs- und Querprofile so entgegengesetzt zueinander angeordnet sind, dass diese Profile im zusammengesetzten Zustand ein mit dem Rahmen verbundenes und mit diesem ein zum Halten der eingangs erwähnten Wägeplatte dienendes, fachwerkartiges Gitter bilden.

Der erfindungsgemässe Lastträger ist kostengünstig. So lassen sich aus einem zahlenmässig beschränkten Lager von verschiedenen Profilen auf einfache Art und Weise Lastträger für Wägesysteme mit unterschiedlichen Dimensionen herstellen, indem man insbesondere eine bestimmte und von der Grösse des herzustellenden Lastträgers abhängige Anzahl von jeweils gleichartigen Längs- und Querprofilen aufeinander steckt und gegebenenfalls noch zusätzlich punktuell verschweisst. Im Gegensatz zur Herstellung bekannter Lastträger werden hierbei keine Schweisslehren benötigt, da bereits das fachwerkartige Gitter, dem Lastträger eine starre und stabile Form verleiht.

Der Erfindungsgegenstand wird nun anhand eines in der Zeichnung dargestellten Ausführungsbeispieles näher beschrieben, wobei im folgenden nur auf die konstruktiven Merkmale des erfindungsgemässen Lastträgers, nicht aber auf die in diesen einzusetzenden Wägezellen, deren Anschlüssse und Regelung eingegangen wird. In der Zeichnung zeigt
die Figur 1 eine Draufsicht auf einen Lastträger mit einer nur zum Teil sichtbar gezeichneten Wägeplatte und vier zur Stabilisierung des Fachwerkes dienenden Fixierblechen,
die Figur 2 eine Ansicht auf ein Längsprofil des fachwerkartigen Gitters,
die Figur 3 eine Ansicht auf ein Querprofil des fachwerkartigen Gitters,
die Figur 4 eine Ansicht auf ein die Längsseite des Rahmens bildenden ersten Profiles,
die Figur 5 eine Ansicht auf ein die Querseite des Rahmens bildenden zweiten Profiles, und
die Figur 6 eine Draufsicht auf eines der vier in der Figur 1 gezeichneten Fixierbleche in stark vergrössertem Massstab.

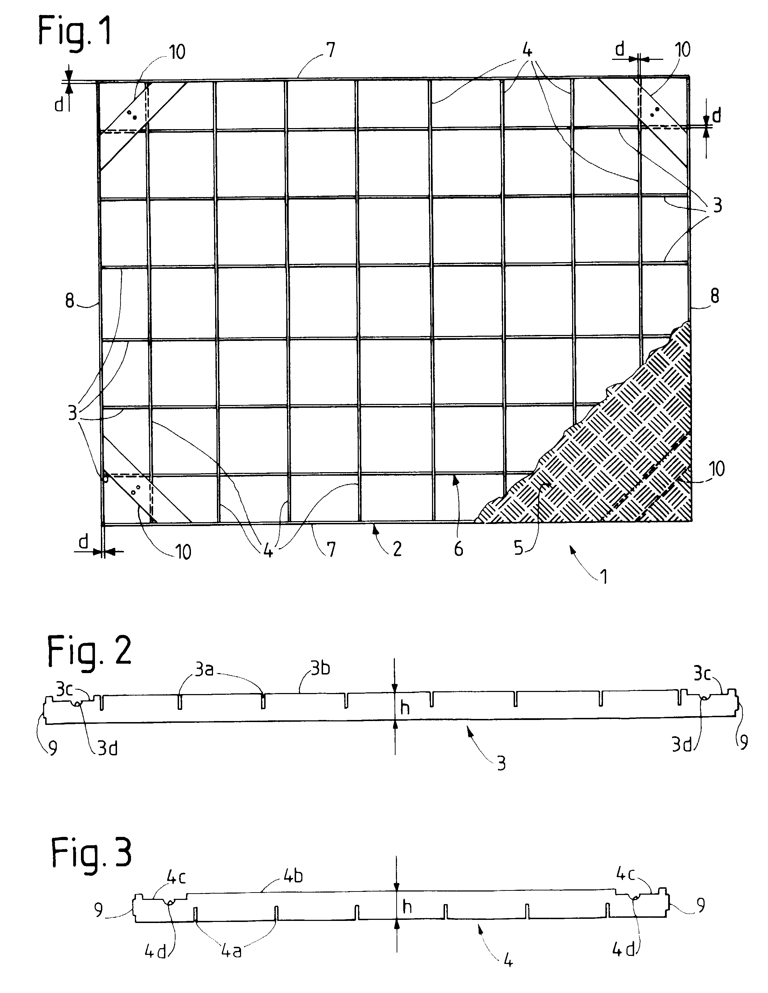

Der in der Figur 1 dargestellte und als ganzes mit 1 bezeichnete metallische Lastträger besitzt einen rechteckigen Rahmen 2 sowie mehrere im zusammengesetzten Zustand miteinander und mit dem Rahmen 2 fest verbundene, in einem rechten Winkel zueinander angeordnete und auf ihren schmalen Längsrändern vertikal stehende Längs- und Querprofile 3 und 4.

Die Längs- und Querprofile 3 und 4 sind erfindungsgemäss als plattenförmige Metallbleche ausgebildet, so wie das in den Figuren 2 und 3 gezeichnet ist. Sie besitzen insbesondere eine einheitliche Profilhöhe h sowie auch eine einheitliche Wandstärke d und bilden zusammen mit dem Rahmen 2 eine zur Aufnahme einer Wägeplatte 5 bestimmte Auflagefläche. Die in der Zeichnung nur zum Teil gezeichnete Wägeplatte 5 ist dabei auf den Längs- und Querprofilen 3 und 4 und/oder auf dem Rahmen 2 angeschweisst oder aufgenietet oder lösbar angeschraubt.

Die Längs- und Querprofile 3 und 4 sind entlang ihrer Längsränder mit je einer Schlitzreihe versehen. Die dazu gehörenden Schlitze 3a bzw. 4a sind hierbei als von den Längsrändern ausgehende Ausnehmungen ausgestaltet, haben einen konstanten Abstand voneinander und weisen eine Länge von h/2 auf. Die beiden Endabschnitte der Längs- und Querprofile 3 und 4 sind zudem mit je einer von der Oberkante 3b bzw. 4b ausgehenden Ausnehmung 3c bzw. 4c zur Aufnahme des nachfolgend noch näher beschriebenen Fixierbleches versehen.

Die beiden Schlitzreihen der Längs- und Querprofile 3 und 4 sind schliesslich so entgegengesetzt zueinander angeordnet, dass sie sich fachwerkartig zu einem Gitter 6 zusammensetzen lassen, und zwar derart, dass im montierten Zustand die genannten Ausnehmungen 3c und 4c der Oberseite des so gebildeten Lastträgers 1 zugewandt sind.

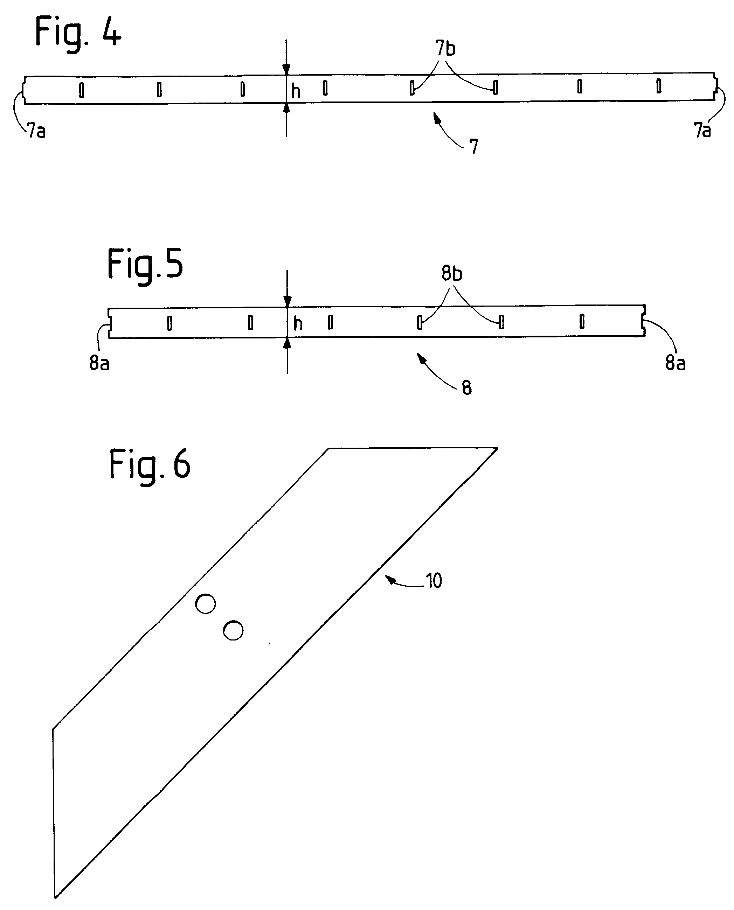

Der Rahmen 2 dient im wesentlichen der formfesten Stabilisierung des durch die sechs Längs- und acht Querprofile 3 bzw. 4 gebildeten Gitters 6. Dazu besteht er aus zwei verschiedenen Profilelementen, nämlich den beiden die Längs- und Querränder des Rahmens 2 bildenden und in den Figuren 4 und 5 in grösserem Massstab gezeichneten Rahmenprofilen 7 und 8. Diese sind bezüglich ihren Abmessungen den Längs- und Querprofilen 3 und 4 angepasst und wie diese als Metallbleche mit der Profilhöhe h und der Wandstärke d ausgebildet.

Das erste Rahmenprofil 7 besitzt an seinen beiden stirnseitigen Enden je einen Vorsprung 7a, und das zweite Rahmenprofil 8 dazu passend zwei stirnseitig angeordnete Ausnehmungen 8a. Ferner besitzen beide Rahmenprofile 7 und 8 je eine Lochreihe zum Einsetzen von mehreren Quer- und Längsprofilen 3 und 4, wobei der Abstand von Lochmitte zu Lochmitte konstant ist und dem Abstand der Schlitze 3a bzw. 4a entspricht, und wobei die Quer- und Längsprofile 3 und 4 mit zu den gegebenenfalls rechteckig geformten Löchern 7b bzw. 8b passenden, stirnseitig angeordneten Vorsprüngen 9 versehenen sind.

Im zusammengesetzten Zustand gemäss Figur 1 sind die ebenfalls auf ihren schmalen Längsrändern vertikal stehenden Rahmenprofile 7 und 8 an ihren die Ecken des Rahmens 2 bildenden stirnseitigen, durch die Vorsprünge 7a bzw. die Aussparungen 8a gebildeten Enden miteinander verschweisst, wobei die Längs- und Querprofile 3 und 4 des Gitters 6 mit ihren Vorsprüngen 9 in den Löchern 7b bzw. 8b der Rahmenprofile 7 und 8 stecken.

Zur Erhöhung der Stabilität ist in jedem Eckbereich des Lastträgers 1 noch zusätzlich je ein - in der Figur 6 in vergrössertem Massstab gezeichnetes - Fixierblech 10 angeordnet. Jedes Fixierblech 10 liegt hierbei sowohl auf einem Quer- als auch auf einem Längsprofil 3 bzw. 4 auf, und zwar in den dafür vorgesehenen Aussparungen 3c und 4c. Letztere sind übrigens noch zusätzlich mit je einer bogenförmigen Vertiefung 3d bzw. 4d versehen, welche zur Aufnahme von Kabeln für die in den Ecken des Lastträgers 1 anzuordnenden - nicht gezeichneten - Wägezellen bestimmt sind. Die Fixierbleche 10 sind nun so ausgebildet und dimensioniert, dass dieses im montierten Zustand seitlich an zwei Rahmenprofilen 7 und 8 satt anliegt und diese in einem rechten Winkel zueinander hält. Das Fixierblech 10 kann hierbei noch zusätzlich am Rahmen 2 und/oder an den Profilen 3 und 4 angeschweisst oder lösbar an diesem bzw. diesen angeschraubt sein.

Zur Erhöhung der Stabilität des Trägers 1 können noch zusätzlich die in den Löchern 7a und 8a steckenden Enden der Längs- und Querprofile 3 und 4 mit den Rahmenprofilen 7 und 8 und/oder die Längs- und Querprofile 3 und 4 miteinander punktuell verschweisst sein.

Abschliessend sei noch darauf hingewiesen, dass der vorstehend anhand der beiliegenden Zeichnung beschriebene Lastträger nur einzelnes Ausführungsbeispiel der Erfindung darstellt und dass dieser im Rahmen der Erfindung verschiedenartig ausgebildet sein kann.

So können die Abmessungen der Lastträger in weiten Grenzen variiert werden, wobei dann mehr oder weniger, d.h. längere oder kürzere Profile der vorstehend genannte Art verwendet werden.

Auch kann der Rahmen des Lastträgers in seiner Bauweise variiert werden und zum Beispiel anstelle aus vier nur aus zwei Teilen bestehen, so etwa aus zwei miteinander verschweissbaren Winkelprofilen.

Schliesslich können die erfindungsgemässen Lastträger auch noch lösbar befestigbare Abdeckplatten besitzen, welche in den Eckbereichen zum Verschliessen der zur Aufnahme der Wägezellen dienenden Aussparungen bestimmt sind.

## Patentansprüche

1. Lastträger mit einem rechteckigen Rahmen (2) sowie einer Vielzahl von miteinander und mit dem Rahmen (2) fest verbundenen Längs- und Querprofilen (3, 4), die ihrerseits zusammen mit dem Rahmen (2) eine Auflagefläche für eine Wägeplatte (5) bilden, dadurch gekennzeichnet, dass die senkrecht zueinander angeordneten Längs- und Querprofile (3, 4) aus im zusammengesetzten Zustand auf ihren schmalen Längsrändern vertikal stehenden, plattenförmigen Metallblechen mit einer Profilhöhe h und einer Wandstärke d bestehen, dass diese Profile (3, 4) entlang ihrer Längsränder mit je einer Schlitzreihe versehen sind, wobei die Schlitze (3a, 4a) als von den Längsrändern ausgehende Ausnehmungen ausgestaltet sind, einen konstanten Abstand voneinander haben und eine Länge von h/2 aufweisen, und dass die Schlitzreihen der Längs- und Querprofile (3a, 4a) so entgegengesetzt zueinander angeordnet sind, dass letztere im zusammengesetzten Zustand ein mit dem Rahmen (2) verbundenes und mit diesem ein die Auflagefläche bildendes fachwerkartiges Gitter (6) bilden.

2. Lastträger nach Anspruch 1, dadurch gekennzeichnet, dass der Rahmen (2) aus zwei paarweise einander gegenüberliegenden Profilelementen gebildet wird, nämlich einem den Rahmenlängsrand bildenden ersten Profil (7) und einem den Rahmenquerrand bildenden zweiten Profil (8), dass diese Profile (7, 8) bezüglich ihren Abmessungen den Längs- bzw. Querprofilen (3, 4) angepasst und wie diese als Metallbleche mit der Profilhöhe h und der Wandstärke d ausgebildet sind sowie je eine Lochreihe zum Einsetzen von mehreren Quer- und Längsprofilen (3, 4) besitzen, wobei der Abstand von Lochmitte zu Lochmitte konstant ist und dem Abstand der Schlitze (3a, 4a) entspricht.

3. Lastträger nach Anspruch 2, dadurch gekennzeichnet, dass die im zusammengesetzten Zustand ebenfalls auf ihren schmalen Längsrändern vertikal stehenden Rahmenprofile (7, 8) an ihren die Ecken des Rahmens (2) bildenden stirnseitigen Enden miteinander verschweisst sind und dass die Quer- und Längsprofile (3, 4) mit zu den Löchern (7b, 8b) passenden, stirnseitig angeordneten Vorsprüngen (9) versehenen sind, mit welchen sie in den Löchern (7b, 8b) der Rahmenprofile (7, 8) stecken.

4. Lastträger nach Anspruch 2 oder 3, dadurch gekennzeichnet, dass das erste Rahmenprofil (7) an seinen beiden stirnseitigen Enden je einen Vorsprung (7a) aufweist und dass das zweite Rahmenprofil (8) mit dazu passenden stirnseitig angeordneten Ausnehmungen (8a) versehen ist.

5. Lastträger nach einem der Ansprüche 1 bis 4, dadurch gekennzeichnet, dass die beiden Endabschnitte der Längs- und Querprofile (3, 4) mit je einer von der Oberkante (3b, 4b) ausgehenden Ausnehmung (3c, 4c) zur Aufnahme eines Fixierbleches (10) versehen sind, welches seinerseits im montierten Zustand seitlich an den Rahmenprofilen (7, 8) satt anliegt und diese in einem rechten Winkel zueinander hält.

6. Lastträger nach einem der Ansprüche 1 bis 5, dadurch gekennzeichnet, dass die in den Löchern (7a, 8a) der Rahmenprofile (7, 8) steckenden Enden der Längs- und Querprofile (3, 4) mit den Rahmenprofilen (7, 8) punktuell verschweisst sind.

7. Lastträger nach einem der Ansprüche 1 bis 6, dadurch gekennzeichnet, dass die Längs- und Querprofile (3, 4) miteinander punktuell verschweisst sind.
